# EUROPEAN PATENT APPLICATION

(11) **EP 4 312 184 A1**
(43) Date of publication of application: **31.01.2024**
(21) Application number: 22187680.8
(22) Date of filing: 29.07.2022
(51) Int. Cl.: G06T 7/00

(54) **EVALUATING STENOSIS PROGRESSION RISK**

(71) Applicant: Koninklijke Philips N.V., 5656 AG Eindhoven (NL)
(72) Inventor: VAN HAAFTEN, Eline Eva, Eindhoven (NL); SCHOONENBERG, Gert Antonius Franciscus, Eindhoven (NL); SHULEPOV, Sergei Y., 5656 AG Eindhoven (NL); UBACHS, René Leonardus Jacobus Marie, 5656 AG Eindhoven (NL); VAN DER SLUIS, Olaf, Eindhoven (NL)
(74) Representative: Philips Intellectual Property & Standards

(57) **Abstract**

A system (100) for evaluating stenosis progression risk for a vessel (110), is provided. The system comprising one or more processors (120) configured to: calculate vessel wall shear stress values (140) at a plurality of positions along the vessel (110) based on a simulation of blood flow (150) in a model (160) of the vessel extracted from angiographic image data (130); calculate stenosis progression risk values (170) at the positions along the vessel (110) based on the vessel wall shear stress values (140); and output a stenosis progression risk map (180) for the vessel (110). The stenosis progression risk map comprises a graphical representation of the vessel including the stenosis progression risk values (170).

## Description

### Technical Field

The present disclosure relates to evaluating stenosis progression risk for a vessel. A system, a computer-implemented method, and a computer program product, are disclosed.

### Background

Vascular stenosis is a term used to describe the narrowing of a blood vessel lumen. Vascular stenoses can occur in arteries as well as in veins, and have the effect of limiting blood flow in the vessel. Vascular stenoses can occur in various parts of the body, and have various associated causes. For instance, atherosclerosis is a condition in which plaque builds up in the arteries, reducing the diameter of the arterial lumen. This reduces the supply of blood to tissues in the body. Atherosclerosis has various names, depending on the arteries that are affected. For instance, obstructive coronary artery disease, "CAD" refers to the build-up of plaque in the arteries of the heart, and peripheral artery disease, "PAD", refers to the build-up of plaque in arteries other than those that supply the heart or the brain, such as in the legs or arms.

If untreated, the consequences of such stenoses can be severe. For instance, a stenosis in the coronary arteries due to CAD can result in coronary ischemia, i.e. a starvation of the blood supply to tissue, in this case to the heart muscle, ultimately resulting in the death of muscle cells. This is commonly known as a heart attack, or myocardial infarction. Consequently, there is interest in determining the risk of a vessel becoming stenosed, or narrowing, over time, i.e. the stenosis progression risk for a vessel in the vasculature.

Various treatment procedures are available for treating vascular stenoses. In the case of cardiac stenoses, one common treatment procedure is a type of minimally-invasive percutaneous coronary intervention "PCI" procedure referred-to as balloon angioplasty. Balloon angioplasty is performed by threading a catheter with a balloon at its distal end through the vasculature to the position of the stenosis. At this position, the balloon is expanded in order to open-up the vessel, and thereby restore blood flow. Balloon angioplasty can be performed with, or without, the use of a stent. If the procedure is performed without the use of a stent, the balloon is then contracted and withdrawn from the body, leaving the vessel to maintain its expanded state of its own accord. If a stent is used in the procedure, the stent is positioned so as to overlap with the stenosis and the balloon is expanded within the stent. Upon expansion, the stent opens-up the vessel, restoring blood flow. After the stent has been expanded, the balloon is contracted and removed from the vessel, whereupon the vessel is maintained in its expanded state by the stent.

Even after treatment procedures such as these have been performed, the blood vessel lumen may subsequently contract over time. A subsequent contraction of the blood vessel lumen is known as "restenosis", or "in-stent restenosis" if it occurs in a vessel that has a stent. Over time, both restenosis and in-stent restenosis can again cause medical complications such as coronary ischemia, resulting in the need to repeat the treatment procedure, i.e. the need to perform a so-called "secondary PCI" procedure. This is inefficient, and incurs additional risks to the patient. Thus, there is also interest in predicting the stenosis progression risk for vessels in the vasculature that have been treated, i.e. the risk of a vessel becoming re-stenosed over time.

The biological processes underlying restenosis following stent implementation are neo-intimal hyperplasia "NIH" and neo-atherosclerosis. Stenting leads to stretching/ disruption of the endothelium and the internal elastic lamina "IEL", the layer that separates endothelial cells from smooth muscle cells "SMCs". This causes SMC migration into the vessel lumen, where they start to proliferate and form extracellular matrix "ECM" causing narrowing of the lumen "NIH". In addition, it causes excessive uptake of circulating lipids leading to plaque formation (neo-atherosclerosis). These processes depend, among other things, on the anatomical location in the arterial tree (e.g., around bifurcations) and the related mechanical stimuli presented to the stented tissue, as mentioned in a document by Gijsen F., et al., "Expert recommendations on the assessment of wall shear stress in human coronary arteries: Existing methodologies, technical considerations, and clinical applications"; Eur. Heart J. 2019;40(41):3421-3433.

These mechanical stimuli can be classified into two categories: passive stimuli that define the physical microenvironment of the tissue, and active stimuli that actively stimulate the tissue and residing cells. Active stimuli come in the form of hemodynamic loading, i.e., wall shear stress "WSS", which is imposed by blood flow, and cyclic stretch, which is imposed by blood pressure. Wall shear stress is in general considered to play a continuous role in the growth, remodelling, and also maintenance of the vascular system via shear stress responsive cellular pathways, as described in the document by Gijsen F., et al., cited above. The same cellular pathways also play a role in the development of CAD, which are triggered by altered wall shear stress patterns after stent deployment. Thus, there remains a need to improve the assessment of stenoses, and in particular to provide an improved evaluation of the stenosis progression risk for vessels in the vasculature.

### Summary

According to one aspect of the present disclosure, a system for evaluating stenosis progression risk for a vessel, is provided. The system includes one or more processors configured to:
- receive angiographic image data representing the vessel;
- calculate vessel wall shear stress values at a plurality of positions along the vessel based on a simulation of blood flow in a model of the vessel extracted from the angiographic image data;
- calculate stenosis progression risk values at the positions along the vessel based on the vessel wall shear stress values; and
- output a stenosis progression risk map for the vessel, the stenosis progression risk map comprising a graphical representation of the vessel including the stenosis progression risk values.

Since, in the above system, stenosis progression risk values are calculated at positions along the vessel based on the vessel wall shear stress values, and a stenosis progression risk map for the vessel is outputted that includes the stenosis progression risk values, the system provides spatial information on the risk of a vessel becoming stenosed over time. A physician may then use this spatial information to assess the need to treat the vessel.

Further aspects, features, and advantages of the present disclosure will become apparent from the following description of examples, which is made with reference to the accompanying drawings.

### Brief Description of the Drawings

Fig. 1 is a schematic diagram illustrating an example of a system 100 for evaluating stenosis progression risk for a vessel, in accordance with some aspects of the present disclosure.
Fig. 2 is a flowchart illustrating an example of a method of evaluating stenosis progression risk for a vessel, in accordance with some aspects of the present disclosure.
Fig. 3 is a schematic diagram illustrating an example of a) a simulation of blood flow velocity 150 in a model 160 of a vessel 110, b) calculated vessel wall shear stress values 140 in the model 160 of the vessel 110, and c) a stenosis progression risk map 180 for the vessel 110 including calculated stenosis progression risk values 170, in accordance with some aspects of the present disclosure.
Fig. 4 is a graph illustrating an example of a relationship 190 between the value of the stenosis progression risk 170 and the value of the vessel wall shear stress 140, in accordance with some aspects of the present disclosure.
Fig. 5 is a schematic diagram illustrating an example of a) a simulation of blood flow velocity 150' in an updated model 160' of a vessel 110 at a future point in time ti, b) calculated vessel wall shear stress values 140' in the updated model 160' of the vessel 110 at the future point in time ti, and c) a stenosis progression risk map 180' for the vessel 110 including calculated stenosis progression risk values 170' at the future point in time ti, in accordance with some aspects of the present disclosure.
Fig. 6 is an example of a stenosis progression risk map 180 for a vessel 110 that does not include a stent, in accordance with some aspects of the present disclosure.
Fig. 7 is a schematic diagram illustrating an example of a) an adapted model 160" of a vessel 110 that includes a stent 200 at a proposed location B - B', b) a simulation of blood flow velocity 150" in the adapted model 160" of the vessel 110, c) calculated vessel wall shear stress values 140" in the adapted model 160" of the vessel 110, and d) a stenosis progression risk map 180" for the vessel 110 including calculated stenosis progression risk values 170", in accordance with some aspects of the present disclosure.
Fig. 8 illustrates an example of a stenosis progression risk map 180" for a vessel 110 that includes a stent at a proposed location B - B', in accordance with some aspects of the present disclosure.
Fig. 9 is an example of a stenosis progression risk map 180 for a vessel 110 that includes a stent 200 and which is calculated using IVUS image data 210, in accordance with some aspects of the present disclosure.

### Detailed Description

Examples of the present disclosure are provided with reference to the following description and figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a system, may be implemented in a computer implemented method, and in a computer program product, in a corresponding manner.

In the following description, reference is made to a system for evaluating stenosis progression risk for a vessel. Reference is made to examples in which the vessel is a coronary artery. However, it is also to be appreciated that the vessel may in general be any artery or vein that is disposed anywhere in the vasculature. For instance, the system may be used to evaluate stenosis progression risk for a vessel in the brain, or in the arm, or the leg, and so forth.

Reference is also made herein to examples in which the system is used to evaluate stenosis progression risk for a vessel that includes a stenosis that is caused by obstructive CAD; i.e. the build-up of plaque in the coronary arteries. However, it is to be appreciated that these serve only as examples, and that the system disclosed herein may alternatively be used to evaluate stenosis progression risk for a vessel that includes a stenosis as a consequence of other causes, or indeed a vessel that does not include any stenosis at all.

It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The functions of one or more of the method features may for instance be provided by processors that are shared within a networked processing architecture such as a client/server architecture, a peer-to-peer architecture, the Internet, or the Cloud.

The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid state memories, magnetic tape, removable computer disks, random access memory "RAM", read-only memory "ROM", rigid magnetic disks and optical disks. Current examples of optical disks include compact disk-read only memory "CD-ROM", compact disk-read/write "CD-R/W", Blu-Ray^{™} and DVD

As mentioned above, there remains a need to improve the assessment of stenoses, and in particular to provide an improved evaluation of the stenosis progression risk for vessels in the vasculature.

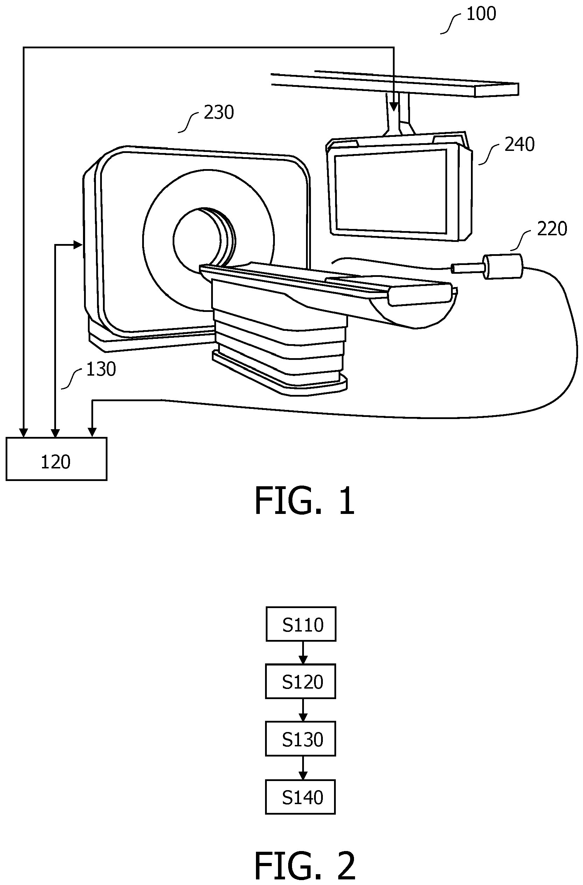

Fig. 1 is a schematic diagram illustrating an example of a system 100 for evaluating stenosis progression risk for a vessel, in accordance with some aspects of the present disclosure. Fig. 2 is a flowchart illustrating an example of a method of evaluating stenosis progression risk for a vessel, in accordance with some aspects of the present disclosure. It is noted that operations described as being performed by the one or more processors of the system 100 illustrated in Fig. 1, may also be performed in method illustrated in Fig. 2, and vice versa. With reference to Fig. 1, the system 100 for evaluating stenosis progression risk for a vessel 110 comprises one or more processors 120 configured to:
- receive S110 angiographic image data 130 representing the vessel 110;
- calculate S120 vessel wall shear stress values 140 at a plurality of positions along the vessel 110 based on a simulation of blood flow 150 in a model 160 of the vessel extracted from the angiographic image data 130;
- calculate S130 stenosis progression risk values 170 at the positions along the vessel 110 based on the vessel wall shear stress values 140; and
- output S140 a stenosis progression risk map 180 for the vessel 110, the stenosis progression risk map comprising a graphical representation of the vessel including the stenosis progression risk values 170.

Since, in the above system 200, stenosis progression risk values are calculated at positions along the vessel based on the vessel wall shear stress values, and a stenosis progression risk map for the vessel is outputted that includes the stenosis progression risk values, the system provides spatial information on the risk of a vessel becoming stenosed over time. A physician may then use this spatial information to assess the need to treat the vessel.

With reference to Fig. 1 and Fig. 2, in the operation S110, the one or more processors 120 are configured to receive angiographic image data 130 representing a vessel 110.

The angiographic image data 130 that is received in the operation S110 may in general be projection data, i.e. data representing a 2D image of the vessel, or alternatively it may be volumetric data, i.e. data representing a 3D image of the vessel 110. In the latter case the data may be raw data, i.e. data that has not been reconstructed into a 3D image, or alternatively the data may be reconstructed image data. The use of volumetric data provides additional detail on the vessel geometry, and which when extracted from the volumetric data in the operation S120 provides a more accurate model of the vessel 110.

In general, the angiographic image data 130 may be generated by a projection X-ray imaging system, or a computed tomography "CT" imaging system, or a magnetic resonance imaging system. The angiographic image data 130 may therefore be projection X-ray attenuation data, volumetric X-ray attenuation data, or magnetic resonance data, respectively. In the case that the angiographic image data 130 is generated by a projection X-ray imaging system, or a CT imaging system, various types of imaging systems may be used, including a spectral X-ray or CT imaging system, a cone beam (spectral) CT imaging system, a photon counting (spectral) CT imaging system, a dark-field (spectral) CT imaging systems, and a phase contrast (spectral) CT imaging system. In the example illustrated in Fig. 2, the angiographic image data 130 is generated by a CT imaging system 230.

The angiographic image data 130 that is received in the operation S110 represents the vessel 110. In this regard, the angiographic image data 130 may be generated subsequent to the injection of a contrast agent into the vasculature. The contrast agent may be injected using an injector, such as the injector 220 illustrated in Fig. 1, for example. The contrast agent may include a substance such as iodine, or a Lanthanide such as gadolinium, or another substance that provides visibility of a vessel through which the contrast agent passes.

Returning to Fig. 2, in the operation S120, the one or more processors 120 are configured to calculate S120 vessel wall shear stress values 140 at a plurality of positions along the vessel 110 based on a simulation of blood flow 150 in a model 160 of the vessel extracted from the angiographic image data 130.

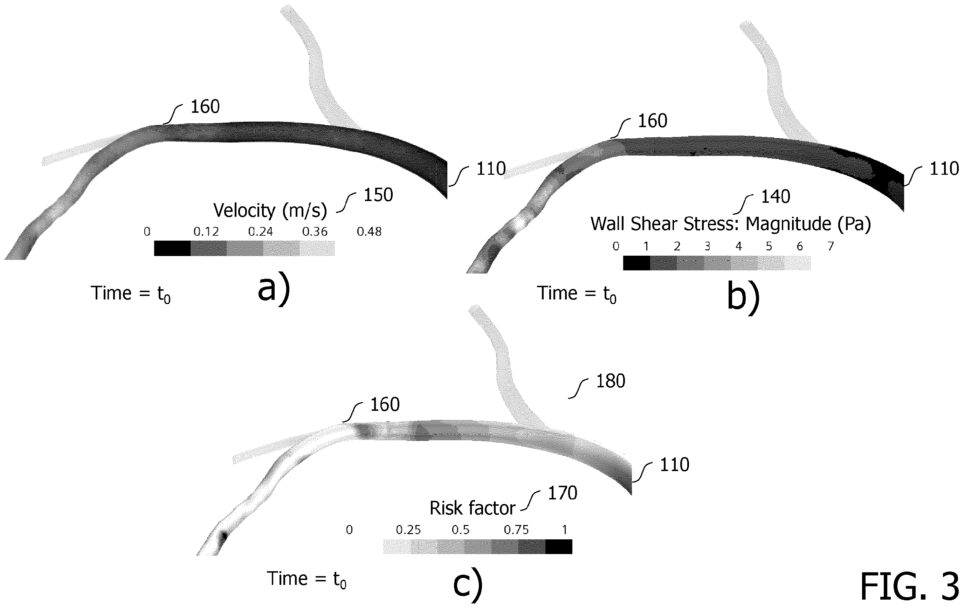

The model 160 is a geometric representation of the vessel 110. An example of a model 160 of a vessel 110 that has been extracted from angiographic image data is illustrated in Fig. 3, which is a schematic diagram illustrating an example of a) a simulation of blood flow velocity 150 in a model 160 of a vessel 110, b) calculated vessel wall shear stress values 140 in the model 160 of the vessel 110, and c) a stenosis progression risk map 180 for the vessel 110 including calculated stenosis progression risk values 170, in accordance with some aspects of the present disclosure.

The model 160 may be extracted from the angiographic image data 130 using various techniques. In some examples, an image segmentation technique is used to extract the model 160 of the vessel 110 from the angiographic image data 130. Segmentation techniques such as model-based segmentation, watershed-based segmentation, region growing or level sets or graphcuts, may be used for this purpose. If the angiographic image data 130 includes projection data, the model 160 of the vessel 110 may be provided by segmenting the projection data. If the model includes volumetric data, a volumetric image may be reconstructed from the data, following which, the reconstructed volumetric image may be segmented in order to provide a model of the vessel. Various known image reconstruction techniques may be used to reconstruct the volumetric image.

In some cases, the angiographic image data 130 is pre-processed prior to segmentation in order to improve the visibility of the vessel. For instance, a digital subtraction angiography "DSA" technique may be used wherein a background image representing the vessel that is generated prior to the injection of a contrast agent is subtracted from an image representing the vessel that is acquired after the injection of the contrast agent. The result is to provide a subtraction image in which image data for the background structures has been removed, and in which the visibility of the vessel is improved. Alternatively, if the angiographic image data 130 is generated by a spectral X-ray or CT imaging system, various material decomposition techniques may be used to extract data for the contrast agent from the angiographic image data 130, and to thereby improve the visibility of the vessel 110.

After having extracted the model 160 from the angiographic image data 130, a simulation of blood flow 150 in the model 160 is then performed. The simulation may be performed by describing the blood flow in the vessel using the Navier-Stokes equations, and solving these equations using a computational fluid dynamics "CFD" approach. Methodology of blood flow modelling in the vasculature are described in a document by Gijsen, F. et al. This document gives also overview of techniques for solving the Navier Stokes equation, and for ultimately providing a velocity profile of the blood flow in the model of the vessel.

The result of the simulation of the blood flow is to provide a distribution of the blood flow velocity along the model of the vessel 110. An example of the simulated blood flow 150 for the vessel 110, is illustrated in Fig. 3a. The simulation is performed using boundary conditions for blood flow parameters such as the blood velocity and the blood pressures. Values for the boundary conditions may be estimated based on the geometry of the vessel in the angiographic image data, or based on typical values expected for the subject based on characteristics such as age, gender, and so forth. Alternatively, values for the boundary conditions may be measured in the subject to which the vessel pertains using intravascular devices such as a pressure wire, or a flow wire.

In the operation S120, vessel wall shear stress values 140 are calculated from at a plurality of positions along the vessel 110 based on the simulation of the blood flow 150. The vessel wall shear stress is defined as the tangential component of force that is exerted on the vessel wall by blood flowing in the vessel. As mentioned in the document by Gijsen, F. et al., cited above, wall shear stress has a major impact on endothelial function and plays a key role in atherosclerotic disease development and in long-term evolution and healing of vessels treated by intravascular devices. Wall shear stress is orders of magnitude smaller than other mechanical stresses affecting the coronary arteries, such as tensile stress or compressive stress and exerts its powerful vascular effects not by a mechanical impact on vascular structure per se, but uniquely by triggering biologic signalling. In the operation S120, vessel wall shear stress values 140 are calculated from the local blood velocity distribution in a patient-specific vessel geometry. An example of the vessel wall shear stress values 140 that are calculated from the blood flow velocity illustrated in Fig. 3a, is illustrated in Fig. 3b.

In the example illustrated in Fig. 3, the blood flow velocity is calculated for a static vessel 110. In this example, the blood flow velocity, and the wall shear stress, have a single value at each position along the vessel 110, as illustrated in Fig. 3a and Fig. 3b. In one example, the angiographic image data includes a temporal sequence of images representing the vessel over time, and the temporal sequence of images is used to generate temporal values for the vessel wall shear stress values. In this example, the received angiographic image data comprises a temporal sequence of images representing a motion of the vessel over at least a portion of a cardiac cycle, and the calculated vessel wall shear stress values comprise temporal values calculated based on a shape of the lumen of the vessel at the positions along the vessel in the images in the temporal sequence. The one or more processors are configured to calculate the stenosis progression risk values, using the temporal values of the vessel wall shear stress. Changes in the shape of the vessel's lumen during the cardiac cycle affect the blood flow velocity, and also its profile, and this gives rise to changes in the wall shear stress. Consequently, by calculating the stenosis progression risk values using temporal values of the vessel wall shear stress, a more detailed analysis of the stenosis progression risk values, is provided. In this example, the shape of the vessel's lumen may be determined by segmenting volumetric angiographic image data 130. The temporal values of the vessel wall shear stress are determined by extracting a geometric model of the vessel from each of multiple images in the temporal sequence. The model may be extracted using the techniques described above. A simulation of the blood flow is performed in each of the models in order to calculate the temporal values for the wall shear stress. In this example, in the operation S130, the temporal values of the vessel wall shear stress are then used to calculate S130 stenosis progression risk values 170. This may be performed by calculating the average vessel wall shear stress from the temporal values or using the temporal sequence of values of the vessel wall shear stress, resulting in a single stenosis progression risk value or a temporal sequence of stenosis progression risk value, respectively.

Returning to Fig. 2, in the operation S130, the one or more processors 120 are configured to calculate stenosis progression risk values 170 at the positions along the vessel 110 based on the vessel wall shear stress values 140. In general, the stenosis progression risk is defined as the probability of a vessel's lumen narrowing to a predetermined proportion of its current diameter within a given period of time. The stenosis progression risk may be defined for a period of time, such as a number of minutes, hours, days, weeks, and so forth. By way of an example, the stenosis progression risk may be defined as the risk of a vessel lumen diameter reducing to 50 % of its current diameter. The stenosis progression risk may for example be defined as the risk of a vessel lumen diameter reducing to 50 % of its current diameter within one year.

The stenosis progression risk values 170 may be calculated based on the vessel wall shear stress values 140 using a predetermined relationship 190 between the value of the stenosis progression risk 170 and the value of the vessel wall shear stress 140. The predetermined relationship may be stored in the form of a lookup table, or a database. The lookup table or database may be interrogated the one or more processors 120 in order to determine the values of the stenosis progression risk. Alternatively, the predetermined relationship may be represented by a mathematical function and evaluated by the one or more processors 120 for a desired value of the vessel wall shear stress.

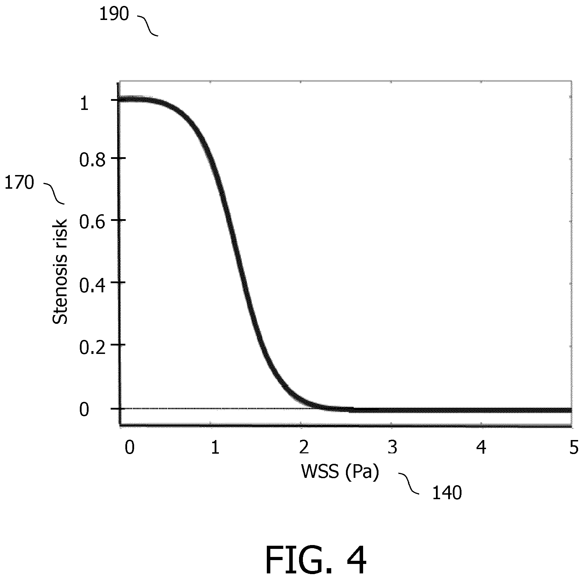

An example of a predetermined relationship between the value of the stenosis progression risk and the value of the vessel wall shear stress is described with reference to Fig. 4, which is a graph illustrating an example of a relationship 190 between the value of the stenosis progression risk 170 and the value of the vessel wall shear stress 140, in accordance with some aspects of the present disclosure. The graph illustrated in Fig. 4 associates a relatively lower value of the wall shear stress, WSS, with a relatively higher value of the stenosis progression risk, and vice versa. In the illustrated graph, low wall shear stress (i.e. WSS values less than approximately 1 Pa) is associated with a risk for (re)stenosis and inflammatory response; high risk being associated with wall shear stress values that are less than approximately 0.5 Pa, and medium-to-high risk being associated with wall shear stress values that are less than approximately 1 Pa. High values of wall shear stress (i.e. WSS values greater than approximately 2 Pa) is considered to be favorable for integrity of the endothelium, and is associated with a low risk for arterial (re)stenosis. Very high values of wall shear stress (i.e. WSS values greater than approximately 7 Pa) may even be considered to cause an erosion of a stenosis. Highly fluctuating disturbed blood flow with frequencies that are greater than approximately 2 Hz are considered to risk causing an inflammatory response.

In some examples, the predetermined relationship 190 represents the value of the stenosis progression risk 170 as a continuous function of the value of the vessel wall shear stress 140. An example of such a continuous function is illustrated in Fig. 3. By using a continuous function, a more detailed assessment of the risk is provided because abrupt transitions in the level of risk are avoided.

In some examples, the predetermined relationship 190 is based on subject age and/or subject gender. In these examples, the graph illustrated in Fig. 4, may be shifted along the horizontal axis, or it may have a different gradient in the transition region between low risk values and high risk values, for subjects having different ages, and different genders. In these examples, the one or more processors may therefore access a predetermined relationship 190 based on the age and/or gender of a subject to which the vessel pertains, in order to evaluate the values for the stenosis progression risk.

Returning to Fig. 2, in the operation S130, the one or more processors 120 are configured to output S140 a stenosis progression risk map 180 for the vessel 110. The stenosis progression risk map comprises a graphical representation of the vessel including the stenosis progression risk values 170. In general, the stenosis progression risk map may include a two-dimensional, or a three-dimensional graphical representation of the vessel. In some examples, the graphical representation of the vessel is generated from the angiographic image data 130. For instance, the graphical representation of the vessel may be provided by the model 160, or it may be provided by reconstructing, or displaying, the angiographic image data 130 in another manner. For instance, a projection image may be generated from the angiographic image data 130, or another reconstruction technique may be used to generate a different reconstructed image from the angiographic image data. Alternatively, the graphical representation of the vessel may be provided by another type of image data for the vessel, such as e.g. intravascular ultrasound "IVUS" image data, or by a schematic representation of the vessel 110. The stenosis progression risk values 170 may be overlaid on the graphical representation of the vessel in order to provide the stenosis progression risk map, for example.

An example of a stenosis progression risk map 180 is illustrated in Fig. 3c. In this example, the graphical representation of the vessel is provided by the model 160, and the model is overlaid with colour-coded values for the stenosis progression risk, as indicated by the "Risk factor" scale in the bottom portion of Fig. 3c. In Fig. 3c, the stenosis progression risk has been evaluated as relatively low for the left-hand, and the right-hand portions of the vessel 110. However, a relatively high risk has been identified in the central portion of the vessel. A physician may subsequently use the stenosis progression risk map 180 to determine which portions of the vessel require treatment.

Various additional operations may also be performed by the one or more processors 120.

In one example, the wall shear stress values are used to predict an amount of tissue growth, or an amount of remodelling of the vessel 110. As mentioned above, wall shear stress is in general considered to play a continuous role in the growth, remodelling, and also maintenance of the vascular system. In this context, tissue growth in the vessel refers to additional tissue being created in or on the existing vessel wall in the form of ECM and cell proliferation, and remodelling refers to structural and functional changes of the vessel wall tissue through reorganization and/or transformation. In this example, the wall shear stress is used to provide a stenosis progression risk map for a future point in time. In this example, the one or more processors 120 are further configured to:
- predict, from the calculated vessel wall shear stress values 140, an amount of tissue growth in the vessel 110 and/or an amount of remodelling of the vessel 110, at a future point in time ti;
- update the model 160 of the vessel 110 based on the predicted amount of tissue growth and/or the predicted amount of remodelling; and
- repeat the calculating S120 vessel wall shear stress values 140, and the calculating S130 stenosis progression risk values 170, using the updated model 160' of the vessel 110; and
- output a stenosis progression risk map 180' for the vessel 110 with the predicted amount of tissue growth and/or the predicted amount of remodelling, for the future point in time ti.

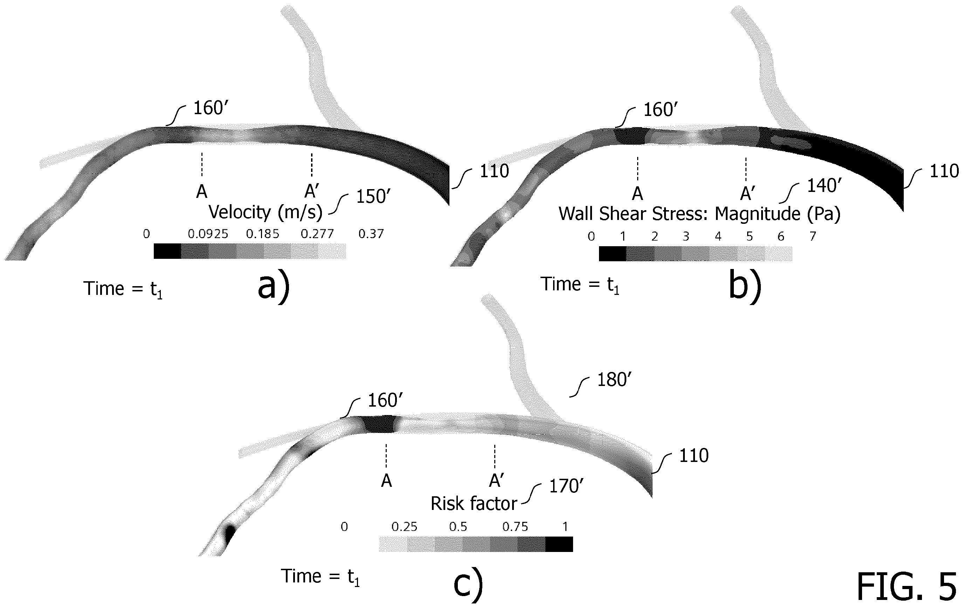

This example is described with reference to Fig. 5, which is a schematic diagram illustrating an example of a) a simulation of blood flow velocity 150' in an updated model 160' of a vessel 110 at a future point in time ti, b) calculated vessel wall shear stress values 140' in the updated model 160' of the vessel 110 at the future point in time ti, and c) a stenosis progression risk map 180' for the vessel 110 including calculated stenosis progression risk values 170' at the future point in time ti, in accordance with some aspects of the present disclosure.

In this example, the amount of tissue growth and remodelling in the vessel 110 may be estimated from the vessel wall shear stress values 140, e.g. by reducing the local lumen diameter in the vessel until critical WSS values typical for erosion are reached (typically in the range of 2-7 Pa). The amount of tissue growth and remodelling take into account the interaction between various cellular processes, that are driven by the inflammatory response as a function of vessel wall shear stress, age, gender, and co-morbidities. The model 160 of the vessel that was generated from the angiographic image data 130 is then updated using the predicted amount of tissue growth and/or the predicted amount of remodelling. This provides a patient-specific prediction of the stenosis progression risk for the vessel 110. The updating of the model may be performed by e.g. adjusting the geometric representation of the vessel 110 such that it reflects the predicted amount of tissue growth and/or the predicted amount of remodelling, at the future point in time, ti. An example of an updated model 160' that has been updated using this approach is illustrated in Fig. 5a. As may be observed from the central portion A - A' in Fig. 5a, the predicted remodelling has resulted in a reduction of the cross sectional area of the vessel lumen, i.e. a stenosis, in the central portion.

Subsequently, the operations of calculating S120 vessel wall shear stress values 140, and calculating S130 stenosis progression risk values 170, are repeated using the updated model 160' of the vessel 110. These operations are performed in the same manner as the simulations described above. In Fig. 5a, the simulated blood flow velocity 150' is illustrated, and in this example the blood flow has increased in the central portion A - A' as a consequence of the stenosis. The wall shear stress values 140' in the updated model 160' of the vessel 110 that result from the simulated blood flow velocity 150' illustrated in Fig. 5a are illustrated in Fig. 5b. The resulting stenosis progression risk map 180' for the vessel 110 is illustrated in Fig. 5c, this being obtained from the wall shear stress values 140' using the relationship 190 illustrated in Fig. 4.

The stenosis progression risk map 180' for the vessel 110 illustrated in Fig. 5c, may be used by a physician to determine how the growth and remodelling of the vessel affects the stenosis progression risk for the vessel over time, and consequently to determine for which portion of the vessel 110, and at what future point in time ti, a potential treatment procedure should be performed.

In this example, the predicting, the updating, the repeating, and the outputting may be performed iteratively to provide a stenosis progression risk map for the vessel 110 for each of a plurality of future points in time. By performing these operations iteratively, the accumulated tissue growth and/or the accumulated amount of tissue remodelling, may be accounted-for, thereby providing a more accurate stenosis progression risk map for the vessel 110 at each of the future points in time.

The stenosis progression risk map for a future point in time ti may subsequently be used to output a value of a time at which the value of the stenosis progression risk 170' reaches a predetermined value at a position A - A' in the vessel 110. For instance, the time at which the stenosis progression risk reaches 75 % may be outputted for a desired position. This may reflect e.g. a 75 % probability that a dimension of the lumen of the vessel 110 will reduce to e.g. 50 % of its current cross sectional area. Alternatively, or additionally, the stenosis progression risk map for a future point in time ti may be used to output a value of a time at which the value of a dimension of the lumen of the vessel 110 reaches a predetermined value at a position A - A' in the vessel 110. For instance, the time may be outputted for which a cross sectional area of the lumen of the vessel 110 is expected to reach 50 % of its current value. A physician may subsequently use this information to determine when a potential treatment procedure may be required for the vessel 110.

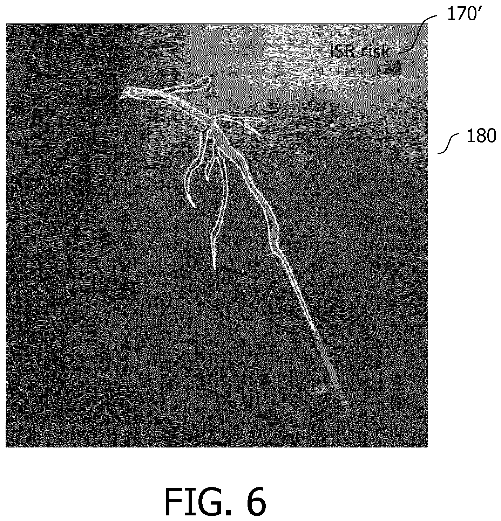

In the examples described above, the one or more processors may be configured to perform the operations of calculating S120 vessel wall shear stress values 140, calculating S130 stenosis progression risk values 170, 170', and outputting a stenosis progression risk map 180, 180', for a vessel that does not include a stent. By way of an example, Fig. 6 is an example of a stenosis progression risk map 180 for a vessel 110 that does not include a stent, in accordance with some aspects of the present disclosure. In contrast to the stenosis progression risk maps 180, 180' illustrated in Fig. 3 and Fig. 5, the stenosis progression risk maps 180 illustrated in Fig. 6 includes a graphical representation of the vessel 110 in the form of an angiographic image rather than a model of the vessel. In Fig. 6, the stenosis progression risk values 170 are overlaid on the graphical representation of the vessel in order to provide the stenosis progression risk map 180.

In other examples, the received angiographic image data 130 represents a vessel that includes a stent 200. In these examples, the stenosis progression risk values 170 represent a risk of in-stent restenosis, "ISR". The risk of in-stent restenosis is defined as the probability of a vessel lumen narrowing to a predetermined proportion (typically defined as 50%) of its current diameter within a stented coronary segment or within 5 mm of a stent edge. As mentioned in a document by Schoen, F. J. et al., "Endovascular Stents, Vascular Grafts, and Stent Grafts", Biomaterials Science (Third Edition), 2013, Chapter: "Angioplasty and Stents", the causes of in-stent restenosis are complex, and are largely due to stent-tissue interactions, including inflammation. Damage to the endothelial lining and stretching of the vessel wall stimulate adherence and accumulation of platelets, fibrin, and leukocytes (white blood cells). Stent wires may eventually become completely embedded in an endothelium-lined layer of intimal fibrosis composed of smooth muscle cells in a matrix of collagen, which is essentially scar. This tissue may thicken secondary to the release of growth factors, chemotactic factors, and inflammatory mediators from platelets and other inflammatory cells that result in increased migration and proliferation of smooth muscle cells, and increased production of extracellular matrix molecules, narrowing the vessel lumen and resulting in restenosis.

In one example, the system described above is used to predict a stenosis progression risk map for a stent in a proposed location, i.e. a "virtual" stent. This risk map may be used by a physician to investigate the impact of inserting a stent in the proposed location, and to thereby predict its efficacy.

In this example, the one or more processors 120 are also configured to:
- receive input defining a proposed location B - B' for a stent 200 in the vessel 110;
- calculate second vessel wall shear stress values 140" at the plurality of positions along the vessel based on a simulation of blood flow 150" in an adapted model 160" of the vessel, wherein the adapted model 160" comprises the model 160 of the vessel 110 extracted from the angiographic image data 130, and wherein the model 160 is adapted to include the stent 200 at the proposed location B - B';
- calculate second stenosis progression risk values 170" at the positions along the vessel 110 based on the second vessel wall shear stress values 140"; and
- output a second stenosis progression risk map 180" for the vessel 110, the second stenosis progression risk map comprising a graphical representation of the vessel 110 including the second stenosis progression risk values 170".

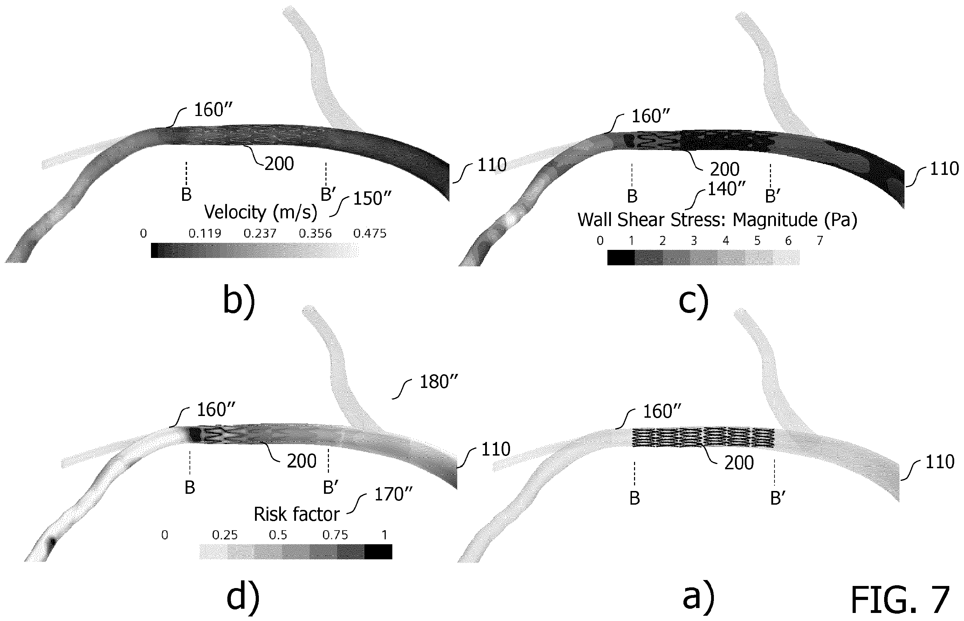

This example is described with reference to Fig. 7, which is a schematic diagram illustrating an example of a) an adapted model 160" of a vessel 110 that includes a stent 200 at a proposed location B - B', b) a simulation of blood flow velocity 150" in the adapted model 160" of the vessel 110, c) calculated vessel wall shear stress values 140" in the adapted model 160" of the vessel 110, and d) a stenosis progression risk map 180" for the vessel 110 including calculated stenosis progression risk values 170", in accordance with some aspects of the present disclosure.

In this example, the input defining a proposed location B - B' for a stent 200 in the vessel 110 may be received from a user input device operating in combination with a displayed image representing the vessel 110. The image may be displayed on a display device, such as the monitor 240 illustrated in Fig. 1, for example. The image representing the vessel 110 may be generated from the angiographic image data 130, as described above. For instance, a reconstructed image may be generated from the angiographic image data 130. Alternatively, the image representing the vessel 110 may be provided by the model 160 of the vessel 110. A user may define the proposed location B - B' for a stent 200 using the user input device. The input defining a proposed location B - B' for a stent 200 in the vessel 110 may alternatively be received from a feature detector, or from a neural network that is trained to automatically identify a proposed location for the stent B - B'. The feature detector, or the trained neural network, may automatically identify the proposed location based on the position of a narrowing of the vessel's lumen, for example.

In this example, second vessel wall shear stress values 140" are calculated at the plurality of positions along the vessel based on a simulation of blood flow 150" in an adapted model 160" of the vessel. The adapted model 160" comprises the model 160 of the vessel 110 extracted from the angiographic image data 130, and wherein the model 160 is adapted to include the stent 200 at the proposed location B - B'. An example of an adapted model 160" is illustrated in Fig. 7a, and wherein the stent 200 is visible in the proposed location B - B'. The adapted model 160" of the vessel 110 may be generated by e.g. adjusting the geometric representation of the vessel 110 such that it includes the stent in the proposed location. In this regard, the stent may apply pressure to the vessel wall, thereby deforming the vessel. The geometric representation of the vessel 110 may therefore be adjusted such that it represents the expected shape of the vessel. The shape of the vessel may be determined using a biomechanical model representing the vessel, and which describes the expansion of the vessel based on the vessel's elasticity, and the spring constant of the stent. An example of such a model is described in the document Auricchio, F. et al. (2011) 'Carotid artery stenting simulation: From patient-specific images to finite element analysis', Medical Engineering & Physics, 33(3), pp. 281-289. Available at: https://doi.org/10.1016/j.medengphy.2010.10.011.

The second vessel wall shear stress values 140" are calculated using the adapted model 160" of the vessel 110 in the same manner as the vessel wall shear stress values 140 that were described above. The model of the vessel may also be updated based on a prediction of an amount of tissue growth in the vessel 110 and/or an amount of remodelling of the vessel 110, at a future point in time ti. The amount of tissue growth and/or remodelling of the vessel 110 may be impacted by the pressure that is applied to the vessel wall by the stent. Thus, the second vessel wall shear stress values 140" may account for changes in a shape of the vessel that arise from the pressure applied to the vessel wall by the stent.

Examples of the blood flow velocity 150", and the wall shear stress values 140" that are calculated using the adapted model 160" of the vessel 110, are illustrated in Fig. 7b and Fig. 7c, respectively. Second stenosis progression risk values 170" are then calculated at the positions along the vessel 110 based on the second vessel wall shear stress values 140". This may be performed using the relationship 190 illustrated in Fig. 4. The resulting stenosis progression risk map 180" for the vessel 110 that includes the second stenosis progression risk values 170" is illustrated in Fig. 7d. In this example, the prediction indicates that despite the placement of the stent 200 in the proposed location B - B', the stenosis progression risk values 170" within the stent, i.e. the risk of ISR, is relatively high. Thus, the system 100 can be used to inform a physician of the expected outcome of pursuing a potential stenting strategy. A physician may subsequently investigate the expected outcome with the stent in another proposed location, or with a stent that has different dimensions, or different mechanical properties, and use this information to decide which course of treatment to pursue.

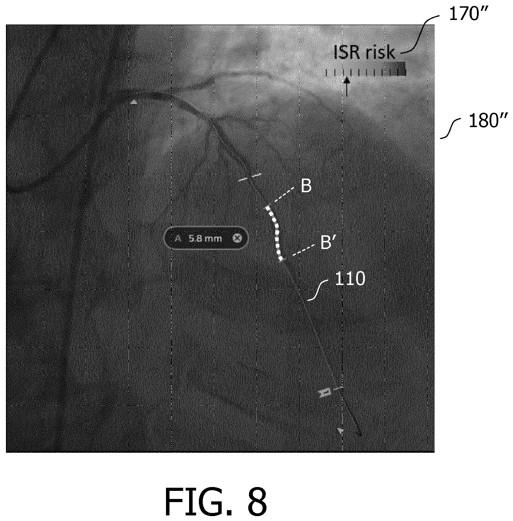

Rather than outputting a stenosis progression risk map 180" that includes a graphical representation of the vessel in the form of a model 160" of the vessel 110, as illustrated in Fig. 7, the stenosis progression risk map 180 may include a graphical representation of the vessel in the form of an angiographic image. In this regard, Fig. 8 illustrates an example of a stenosis progression risk map 180" for a vessel 110 that includes a stent at a proposed location B - B', in accordance with some aspects of the present disclosure. In the example illustrated in Fig. 8, the second stenosis progression risk values 170" are indicated via a pointer on the scale "ISR Risk" for the stent in the proposed location B - B'.

In another example, a graphical representation that includes an adapted model of the vessel 110 with a stent 200 in a proposed location B - B', is outputted. In this example, the one or more processors 120 are configured to:
- receive input defining a proposed location B - B' for a stent 200 in the vessel 110;
- adapt the model 160 of the vessel 110 extracted from the angiographic image data 130 to provide an adapted model including the stent 200 at the proposed location B - B'; and
- output a graphical representation including the adapted model of the vessel 110 with the stent 200 in the proposed location B - B'.

In this example, the adapted model may be generated in similar manner to that described above, e.g. by adjusting the geometric representation of the vessel 110 such that it includes the stent in the proposed location. By outputting the graphical representation including the adapted model of the vessel 110 with the stent 200 in the proposed location B - B', a physician may use the graphical representation to determine whether the deployed stent would be in an acceptable position if the stent were subsequently positioned in the proposed location. In this example, biomechanical model may be used to generate values for the vessel wall stress and strain incurred during an expansion of a balloon angioplasty device in the vessel and/or values for the vessel wall stress and strain arising from an inserted stent in the vessel. These values may then be outputted to assist the physician in assessing the suitability of the proposed location B - B' for the stent.

In some examples, the one or more processors 120 are configured to receive IVUS image data for the vessel. IVUS image data provides data for the vessel 110 from a different perspective to that of the angiographic image data 130. IVUS image data also represents anatomical features of the vessel with a differing level of specificity. For instance, plaque within the vessel may be accurately depicted in IVUS image data. The IVUS image data may therefore be used to augment the information on the vessel 110 that is provided by the angiographic image data 130.

In one example, the one or more processors 120 are further configured to:
- receive intravascular ultrasound, IVUS, image data 210 representing the vessel 110; and
- adapt the model 160 of the vessel 110 extracted from the angiographic image data 130, based on the received IVUS image data; and
- wherein the calculating S120 vessel wall shear stress values 140, and the calculating S130 stenosis progression risk values 170, are performed using the adapted model of the vessel 110.

In this example, the IVUS image data representing the vessel 110 may be generated during a pullback operation wherein an IVUS imaging transducer is withdrawn through the vasculature, including the vessel 110. The IVUS image data is then registered to the angiographic image data 130 in order to provide spatial correspondence between the two data sets. The registration may be performed based on a tracking of the spatial position of the IVUS imaging transducer during pullback. The tracking may be performed using e.g. electromagnetic "EM" tracking, and the registration may be performed by registering the coordinate system of the EM tracking system to the coordinate system of the angiographic imaging system 230. Alternatively, the tracking may be performed by imaging the IVUS imaging transducer during pullback. In this case, the spatial position of the IVUS imaging transducer is inherently registered to the coordinate system of the angiographic imaging system 230. The IVUS image data provides accurate geometric data for the vessel 110, including, inter alia, accurate measurements for a diameter and a cross sectional area of the vessel lumen at positions along the length of the vessel.

In this example, the geometric data, including e.g. values for the lumen dimensions described above, are used to adapt the model 160 of the vessel that was extracted from the angiographic image data 130, and to thereby improve its accuracy. The model 160 may be adapted by e.g. adjusting the geometric representation of the vessel 110 to match the geometric data obtained from the IVUS image data. Subsequently, the operations of calculating S120 vessel wall shear stress values 140, and calculating S130 stenosis progression risk values 170, are repeated using the updated model of the vessel 110. These operations are performed in the same manner as the simulations described above.

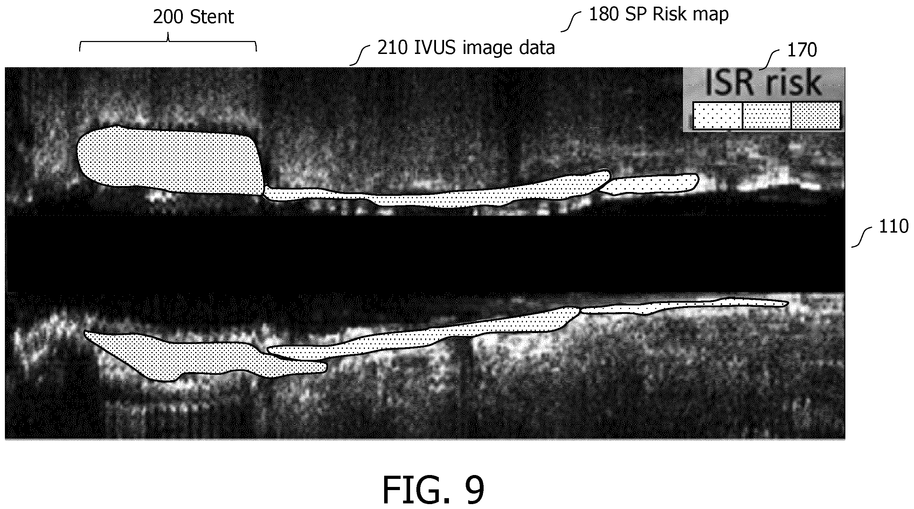

An example wherein the one or more processors 120 are configured to receive IVUS image data for a vessel 110 that includes a stent is described with reference to Fig. 9. Fig. 9 is an example of a stenosis progression risk map 180 for a vessel 110 that includes a stent 200 and which is calculated using IVUS image data 210, in accordance with some aspects of the present disclosure. The detailed shape of the vessel 110 in the vicinity of the stent 200 is visible towards the left-hand side of Fig. 9. As may be appreciated, by using the IVUS image data to adapt the model in accordance with this example, a more accurate prediction of the stenosis progression risk values 170 may be provided.

In this example, the received angiographic image data 130 represents a vessel that includes a stent 200, and the one or more processors 120 are configured to adapt the model 160 of the vessel 110 extracted from the angiographic image data 130 by:
- extracting, from the received IVUS image data, geometric data representing a shape of the vessel 110 and a shape of the stent 200; and
- changing a shape of the model 160 of the vessel 110 extracted from the angiographic image data 130 using the extracted geometric data.

In this example, the operation of extracting geometric data for the vessel and the stent from the IVUS image data may be performed by reconstructing the IVUS image data to provide a 3D IVUS image representing the vessel, and segmenting, using known segmentation techniques, the reconstructed IVUS image to identify features such as the vessel wall, and the stent. As may be appreciated from Fig. 9, the stent is clearly visible in IVUS images via the characteristic pattern of trans-axial lines extending away from the vessel wall. Features such as these may by identified by segmenting the reconstructed IVUS image, or they may be detected in the reconstructed IVUS image using a feature detector, or a neural network, and consequently used to identify the location of the stent 200. Features such as plaque, and other deposits along the vessel wall may also be identified from the IVUS image data via image segmentation, or by using a feature detector, or a trained neural network. These features may also be used to predict an amount of growth, or an amount of vessel remodelling, using the techniques described above.

In the example illustrated in Fig. 9, it is noted that the graphical representation of the vessel 110 is provided by the IVUS image data. Thus Fig. 9 differs from the graphical representations in Fig. 3 and Fig. 6 and in which the vessel 110 is represented by a model 160, or by an angiographic image. As may be appreciated, the stenosis progression risk map 180 illustrated in Fig. 9 represents the vessel 110 with relatively higher spatial resolution, and may therefore provide a more detailed map of the calculated stenosis progression risk values 170. Thus, the representation illustrated in Fig. 9 may facilitate a physician to provide an improved assessment of the vessel 110.

In one example, IVUS image data representing a vessel that includes a stent is used to calculate a measure of malapposition of the stent.

As described in a document by Karalis, I, et al., "Late acquired stent malapposition: why, when and how to handle?", Heart 2012; 98:1529-1536, stent malapposition, also referred to as incomplete stent apposition, is defined by the separation of at least one stent strut from the intimal surface of the arterial wall with evidence of blood behind the strut, in a segment not overlying side branches. Stent malapposition can be quantified by various techniques, including measuring the number of malapposed struts, the arc subtended by the malapposed struts, the distance between the malapposed struts and the vessel wall, and the area, length and volume of the gap between the stent and the vessel wall.

In this example, the received angiographic image data 130 represents a vessel that includes a stent 200, and the one or more processors 120 are further configured to:
- receive IVUS image data representing the vessel 110;
- calculate, from the received IVUS image data, a measure of malapposition of the stent 200; and
- output a value representing the measure of malapposition of the stent; and
- advise on the need to update the calculated stenosis progression risk values 170 based on the calculated measure of malapposition of the stent compared to the malapposition of the virtually placed stent; and wherein the outputting a stenosis progression risk map 180 for the vessel 110 comprises outputting the updated stenosis progression risk values.

In this example, the calculated stenosis progression risk values 170 may be updated based on the actual positioning of the stent by recalculating the simulation using the actual stent positioning. for example.

A value for the measure of malapposition of the stent may be outputted in various ways. A value for the measure of malapposition may be outputted graphically or as a numerical value. A value for the measure of malapposition may be outputted to a display device, or to a computer readable storage medium, or to a printer. For instance, a value for the measure of malapposition may be outputted to the monitor 240 illustrated in Fig 1.

In one example, the one or more processors 120 are configured to output the measure of malapposition of the stent 200 by:
- outputting a graphical representation of the received IVUS image data, or the received angiographic image data 130; and
- overlaying a graphical representation of the measure of malapposition of the stent 200 on the graphical representation of the received IVUS image data, or on the received angiographic image data 130, respectively.

In this example, the graphical representation of the measure of malapposition of the stent 200 may for instance include an icon representing one or more of: the number of malapposed struts, the arc subtended by the malapposed struts, the distance between the malapposed struts and the vessel wall, the area, the length, or the volume of the gap between the stent and the vessel wall, for example.

In another example, the system described with reference to Fig. 1 is used to calculate a value of a blood flow parameter from the angiographic image data 130 that is received in the operation S110. In this example, the one or more processors 120 are configured to:
- calculate, from the received angiographic image data 130, a value of a blood flow parameter for the vessel 110; and
- output the calculated value of the blood flow parameter.

Values of blood flow parameters that may be calculated and outputted in accordance with this example include the Fractional Flow Reserve "FFR", the instantaneous wave-free ratio "iFR", the Coronary Flow Reserve "CFR", the Thrombolysis in Myocardial Infarction "TIMI" flow grade, the Index of Microvascular Resistance "IMR", and the Hyperaemic Microvascular Resistance index "HMR", for example. The value of the blood flow parameter may be calculated based on the simulation of the blood flow 150 in a model 160, 160', 160", that was described above. Thus, the value of blood flow parameters may be calculated for the vessel in its current state, as represented in the angiographic image data 130, or for an adapted vessel in which a predicted amount of growth or remodelling has occurred, or for an adapted vessel that includes a virtual stent.

An example is now described in which the blood flow parameter is an FFR value for the vessel. A value for the Fractional Flow Reserve "FFR" is often determined in order to assess the impact of a stenosis on delivery of oxygen to the heart muscle in investigations for CAD. The FFR is defined by the ratio *P_{d}*/*Pₐ*, wherein *P_{d}* represents a distal pressure at a distal position with respect to the stenosis, and *Pₐ* represents a proximal pressure a proximal position with respect to the stenosis. The ostium of the relevant artery is often used as the proximal position. The FFR is typically calculated with values for *P_{d}* and *Pₐ* that are averaged over the cardiac cycle measured under maximal hyperemia mediated by adenosine. FFR values above 0.8 are typically regarded as clinically insignificant, and values below 0.8 are typically considered to represent increased clinical significance. According to fluid flow theory, pressure changes are, among other effects, linked to changes in fluid velocity. In this example, values for the pressure at the distal position and at the proximal position may be determined from the blood flow velocity 150, 150', 150" that are calculated in the simulations described above, and subsequently used to determine a value for the FFR.

The one or more processors 120 may also output other graphical representations, For instance, the one or more processors 120 may also be configured to output graphical representations of one or more of the following:
- a map representing the calculated vessel wall shear stress values 140, 140', 140";
- a map representing the simulation of blood flow 150, 150', 150" in the model 160, 160', 160" of the vessel 110.

The maps generated in accordance with this example may be used by a physician to determine the current vessel wall shear stress, or blood flow, and to determine the expected improvement that may be achieved by from various virtually-placed stents. These maps may be providing a graphical representation of the vessel, e.g. as an angiographic image including the vessel, or as a model of the vessel, and overlaying the vessel wall shear stress values, or the simulation of blood flow, onto the graphical representation of the vessel.

In another example, the system described with reference to Fig. 2 is used to evaluate the stenosis progression risk for a vessel 110 that does not includes a stent, and a measure of malapposition of a stent in a proposed location is predicted and outputted.

In this example, the operations of calculating S120 vessel wall shear stress values 140, calculating S130 stenosis progression risk values 170, 170', and outputting a stenosis progression risk map 180, 180', are performed for a vessel that does not include a stent, and the one or more processors 120 are configured to:
- receive input defining a proposed location B - B' for a stent 200 in the vessel 110;
- adapt the model 160 of the vessel 110 extracted from the angiographic image data 130 to provide an adapted model including the stent 200 at the proposed location B - B'; and
- predict a value of a measure of malapposition of the stent 200 in the adapted model of the vessel 110, and output a graphical representation including the adapted model of the vessel 110 with the stent 200 in the proposed location B - B' and the predicted value of the measure of malapposition.

A physician may use the outputted graphical representation to determine whether the measure of malapposition is acceptable prior to deploying the stent in the proposed location.

It is noted that in the examples described above, the system 100 may also include one or more of: an angiographic imaging system for providing the angiographic image data 130, such as for example the CT imaging system 230 illustrated in Fig. 1; an injector 220 for injecting a contrast agent into the vasculature; a monitor 240 for displaying the outputted stenosis progression risk map(s) 180, 180', 180", a value representing a measure of malapposition of a stent, calculated values or a blood flow parameter, and so forth; a patient bed; and a user input device configured to receive user input, such as a keyboard, a mouse, a touchscreen, and so forth.

In another example, a computer-implemented method of evaluating stenosis progression risk for a vessel 110, is provided. The method includes:
- receiving S110 angiographic image data 130 representing the vessel 110;
- calculating S120 vessel wall shear stress values 140 at a plurality of positions along the vessel 110 based on a simulation of blood flow 150 in a model 160 of the vessel extracted from the angiographic image data 130;
- calculating S130 stenosis progression risk values 170 at the positions along the vessel 110 based on the vessel wall shear stress values 140; and
- outputting S140 a stenosis progression risk map 180 for the vessel 110, the stenosis progression risk map comprising a graphical representation of the vessel including the stenosis progression risk values 170.

In another example, a computer program product, is provided. The computer program product comprises instructions which when executed by one or more processors 120, cause the one or more processors to carry out a method of evaluating stenosis progression risk for a vessel 110, comprising
- receiving S110 angiographic image data 130 representing the vessel 110;
- calculating S120 vessel wall shear stress values 140 at a plurality of positions along the vessel 110 based on a simulation of blood flow 150 in a model 160 of the vessel extracted from the angiographic image data 130;
- calculating S130 stenosis progression risk values 170 at the positions along the vessel 110 based on the vessel wall shear stress values 140; and
- outputting S140 a stenosis progression risk map 180 for the vessel 110, the stenosis progression risk map comprising a graphical representation of the vessel including the stenosis progression risk values 170.

The above examples are to be understood as illustrative of the present disclosure, and not restrictive. Further examples are also contemplated. For instance, the examples described in relation to the system 100, may also be provided by the computer-implemented method, or by the computer program product, or by a computer-readable storage medium, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

## Claims

1. A system (100) for evaluating stenosis progression risk for a vessel (110), the system comprising one or more processors (120) configured to:
receive (S110) angiographic image data (130) representing the vessel (110);
calculate (S120) vessel wall shear stress values (140) at a plurality of positions along the vessel (110) based on a simulation of blood flow (150) in a model (160) of the vessel extracted from the angiographic image data (130);
calculate (S130) stenosis progression risk values (170) at the positions along the vessel (110) based on the vessel wall shear stress values (140); and
output (S140) a stenosis progression risk map (180) for the vessel (110), the stenosis progression risk map comprising a graphical representation of the vessel including the stenosis progression risk values (170).

2. The system according to claim 1, wherein the stenosis progression risk values (170) are calculated based on the vessel wall shear stress values (140) using a predetermined relationship (190) between the value of the stenosis progression risk (170) and the value of the vessel wall shear stress (140).

3. The system according to claim 2, wherein the predetermined relationship (190) represents the value of the stenosis progression risk (170) as a continuous function of the value of the vessel wall shear stress (140).

4. The system according to claim 2 or claim 3, wherein the predetermined relationship (190) is based on subject age and/or subject gender.

5. The system according to any previous claim, wherein the one or more processors (120) are further configured to:
predict, from the calculated vessel wall shear stress values (140), an amount of tissue growth in the vessel (110) and/or an amount of remodelling of the vessel (110), at a future point in time (ti);
update the model (160) of the vessel (110) based on the predicted amount of tissue growth and/or the predicted amount of remodelling; and
repeat the calculating (S120) vessel wall shear stress values (140), and the calculating (S130) stenosis progression risk values (170), using the updated model (160') of the vessel (110); and
output a stenosis progression risk map (180') for the vessel (110) with the predicted amount of tissue growth and/or the predicted amount of remodelling, for the future point in time (ti).

6. The system according to claim 5, wherein the predicting, the updating, the repeating, and the outputting are performed iteratively to provide a stenosis progression risk map for the vessel (110) for each of a plurality of future points in time.

7. The system according to claim 5, or claim 6, further comprising:
outputting a value of a time at which the value of the stenosis progression risk (170') reaches a predetermined value at a position (A - A') in the vessel (110); and/or
outputting a value of a time at which the value of a dimension of the vessel (110) reaches a predetermined value at a position (A - A') in the vessel (110).

8. The system according to any previous claim, wherein the calculating (S120) vessel wall shear stress values (140), the calculating (S130) stenosis progression risk values (170, 170'), and the outputting a stenosis progression risk map (180, 180'), are performed for a vessel that does not include a stent.

9. The system according to claim 8, wherein the one or more processors (120) are further configured to:
receive input defining a proposed location (B - B') for a stent (200) in the vessel (110);
calculate second vessel wall shear stress values (140") at the plurality of positions along the vessel based on a simulation of blood flow (150") in an adapted model (160") of the vessel, wherein the adapted model (160") comprises the model (160) of the vessel (110) extracted from the angiographic image data (130), and wherein the model (160) is adapted to include the stent (200) at the proposed location (B - B');
calculate second stenosis progression risk values (170") at the positions along the vessel (110) based on the second vessel wall shear stress values (140"); and
output a second stenosis progression risk map (180") for the vessel (110), the second stenosis progression risk map comprising a graphical representation of the vessel (110) including the second stenosis progression risk values (170").

10. The system according to any one of claims 1 - 7, wherein the one or more processors (120) are further configured to:
receive intravascular ultrasound, IVUS, image data (210) representing the vessel (110); and
adapt the model (160) of the vessel (110) extracted from the angiographic image data (130), based on the received IVUS image data; and
wherein the calculating (S120) vessel wall shear stress values (140), and the calculating (S130) stenosis progression risk values (170), are performed using the adapted model of the vessel (110).

11. The system according to claim 10, wherein the received angiographic image data (130) represents a vessel that includes a stent (200), and wherein the one or more processors (120) are configured to adapt the model (160) of the vessel (110) extracted from the angiographic image data (130) by:
extracting, from the received IVUS image data, geometric data representing a shape of the vessel (110) and a shape of the stent (200); and
changing a shape of the model (160) of the vessel (110) extracted from the angiographic image data (130) using the extracted geometric data.

12. The system according to any one of claims 1 - 7, wherein the received angiographic image data (130) represents a vessel that includes a stent (200), and wherein the one or more processors (120) are further configured to:
receive IVUS image data representing the vessel (110);
calculate, from the received IVUS image data, a measure of malapposition of the stent (200); and
output a value representing the measure of malapposition of the stent; and
update the calculated stenosis progression risk values (170) based on the actual positioning of the stent; and wherein the outputting a stenosis progression risk map (180) for the vessel (110) comprises outputting the updated stenosis progression risk values.

13. The system according to claim 12, wherein the one or more processors (120) are configured to output the measure of malapposition of the stent (200) by:
outputting a graphical representation of the received IVUS image data, or the received angiographic image data (130); and
overlaying a graphical representation of the measure of malapposition of the stent (200) on the graphical representation of the received IVUS image data, or on the received angiographic image data (130), respectively.

14. The system according to any one of claims 1 - 7, wherein the received angiographic image data (130) represents a vessel that includes a stent (200); and
wherein the stenosis progression risk values (170) represent a risk of in-stent restenosis, ISR.

15. The system according to claim 8, wherein the one or more processors (120) are further configured to:
receive input defining a proposed location (B - B') for a stent (200) in the vessel (110);
adapt the model (160) of the vessel (110) extracted from the angiographic image data (130) to provide an adapted model including the stent (200) at the proposed location (B - B'); and
output a graphical representation including the adapted model of the vessel (110) with the stent (200) in the proposed location (B - B');
and/or
predict a value of a measure of malapposition of the stent (200) in the adapted model of the vessel (110), and output a graphical representation including the adapted model of the vessel (110) with the stent (200) in the proposed location (B - B') and the predicted value of the measure of malapposition.
